# EUROPEAN PATENT SPECIFICATION

(11) **EP 2 070 299 B1**
(45) Date of publication and mention of the grant of the patent: **28.08.2013**
(21) Application number: 06793513.0
(22) Date of filing: 14.09.2006
(51) Int. Cl.: H04L 29/12

(54) **ADDRESS RESOLUTION IN A COMMUNICATION SYSTEM**
ADRESSENAUFLÖSUNG IN EINEM KOMMUNIKATIONSSYSTEM
RÉSOLUTION D'ADRESSE DANS UN SYSTÈME DE COMMUNICATION

(43) Date of publication of application: 17.06.2009
(73) Proprietor: Telefonaktiebolaget LM Ericsson (publ), 164 83 Stockholm (SE)
(72) Inventor: VORMISTO, Hannu, 02300 Espoo (FI)
(74) Representative: Lind, Robert
(86) International application number: PCT/EP2006/066360
(87) International publication number: WO 2008/031459

(56) References cited:
- WO-A-01/04767
- WO-A1-99/18515
- FALTSTROM CISCO SYSTEMS P ET AL: "The E.164 to Uniform Resource Identifiers (URI) Dynamic Delegation Discovery System (DDDS) Application (ENUM)" IETF STANDARD, INTERNET ENGINEERING TASK FORCE, IETF, CH, April 2004 (2004-04), XP015009541 ISSN: 0000-0003 cited in the application
- 3GPP: "3GPP TS 23.228 v7.4.0 Ip Multimedia Subsystem (IMS)" 3RD GENERATION PARTNERSHIP PROJECT, June 2006 (2006-06), pages 1-197, XP002432746 Valbonne, France cited in the application
- SCHULZRINNE COLUMBIA UNIVERSITY H: "The tel URI for Telephone Numbers", IETF STANDARD, INTERNET ENGINEERING TASK FORCE, IETF, CH, December 2004 (2004-12), XP015009738, ISSN: 0000-0003

## Description

### Field of the Invention

The present invention relates to address resolution in a communication network and in particular though not necessarily to the resolution of local TEL Uniform Resource Identifiers (URIs) to addresses for routing across an IP network.

### Background to the Invention

IP Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia communication services, including so-called "combinational IP Multimedia" services which are considered in more detail below. IP Multimedia Subsystem (IMS) is the technology defined by the Third Generation Partnership Project (3GPP) to provide IP Multimedia services over mobile communication networks (3GPP TS 22.228, TS 23.218, TS 23.228, TS 24.228, TS 24.229, TS 29.228, TS 29.229, TS 29.328 and TS 29.329 Releases 5 to 7. IMS provides key features to enrich the end-user person-to-person communication experience through the use of standardised IMS Service Enablers, which facilitate new rich person-to-person (client-to-client) communication services as well as person-to-content (client-to-server) services over IP-based networks.

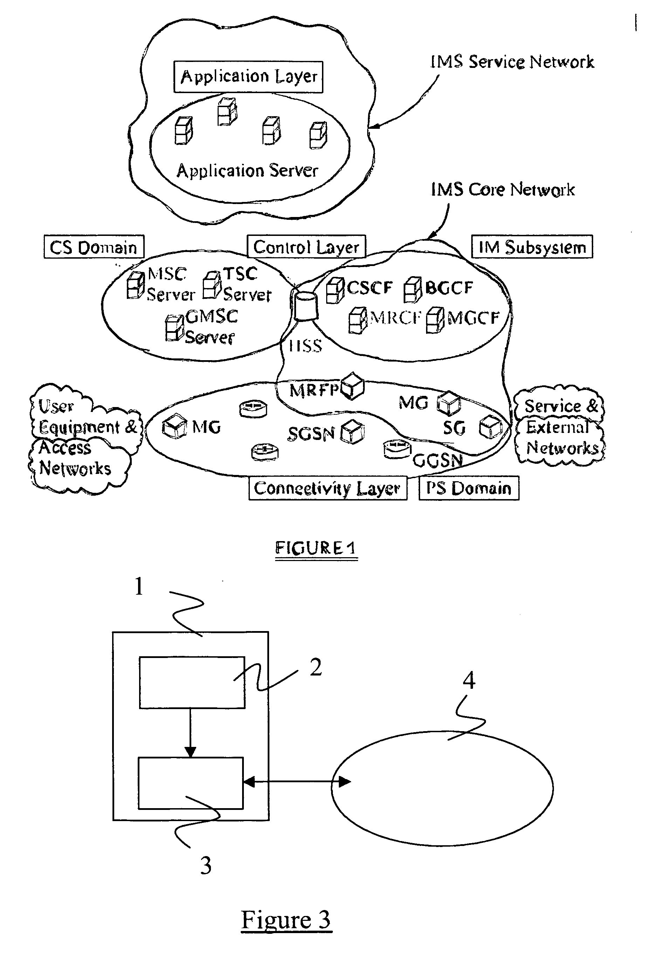

Figure 1 illustrates schematically how the IMS fits into the mobile network architecture in the case of a GPRS/PS access network. Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

In the IMS, users are allocated one or more "public user identities". Users' home operators are responsible for this allocation. A public user identity is typically either a SIP URI or a TEL URI. A SIP URI typically has the format "*sip:firstname.lastname@operator.com* ". A TEL URI on the other hand represents an E.164 phone number. As defined in IETF RFC 3966, a TEL URI representing a globally unique phone number looks like "*tel: +44-123-456-7890*".

The use of global TEL URIs allows the IMS to break out calls from an IMS client to a circuit switched network, as well as allowing subscribers of a circuit switched network to reach IMS subscriber. It also allows IMS subscribers to continue to use traditional telephone numbers, rather than SIP URIs, to reach other IMS subscribers. Whilst messages can be routed through the IMS directly using SIP URIs (using DNS look-up operations to identify next hop IP addresses), the use of TEL URIs requires the IMS to first perform a look-up operation to map TEL URIs to SIP URIs. Within the IMS, mapping of TEL URIs to SIP URIs is typically performed at the allocated S-CSCF.

Globally unique TEL URIs can be resolved to SIP URIs using Telephone Number Mapping (ENUM) practices as described in IETF RFC 3761 and 3764. ENUM provides for the mapping of globally unique TEL URIs to Internet routable URIs, including SIP URIs, using the Internet Domain Name System (DNS). More particularly, the domain name space "e164.arpa" has been assigned by the Internet Assigned Numbers Authority (IANA) to facilitate E164 number mapping. Mapping is achieved by taking the complete E.164 address and removing all non-digit symbols (e.g. "+") from the address. The digit string is reversed and a "." is placed between each pair of digits. The string ".e164.arpa." is then appended to make a complete DNS query string. So, for example, the E.164 number "+44 1234 456789" would be translated to the DNS query string "9.8.7.6.5.4.3.2.1.4.5.e164.arpa.".

ENUM relies upon URI resource records known as Naming Authority Pointers (NAPTR) records stored in the DNS server which "owns" the TEL URI. A NAPTR record contains the following fields:
An Order field to specify the order in which multiple NAPTR records must be processed;
A Preference field to determine the processing order when multiple NAPTR records have the same order value;
A Service field specifying the resolution protocol and service, for example "E2U+SIP" specifies that a NAPTR record relates to the SIP service and that the E2U (E.164 to URI) resolution protocol should be used. "E2U+mailto" specifies that a NAPTR record relates to a mail service;
Flags modifying actions of further DNS lookups;
A regular expression to allow the query client to rephrase the original request in a DNS format; and
A Replacement field to define the next DNS query object.

An ENUM query to the DNS system returns one or more NAPTR records which identify respective services. The agent making the DNS query processes the NAPTR records in the required order and selects a service that matches the service characteristics of the original request (telephone call, text message, etc). The result is a URI, for example the SIP URI sip:jim@operator.com. The agent then makes a further DNS query to resolve the domain part of the URI (sip.operator.com) to an IP address and port number for a preferred server for the service.

Tel URIs may also be specified in a local number format, i.e. a format that is not globally unique. Routing with local TEL URIs will require the inclusion within the TEL URI of a "phone-context" as defined in the IETF RFC 3966. A phone-context is a parameter which identifies the domain (e.g. network) within which the local format number exists. A routing node within this domain will recognise a phone-context identifying the domain, and will route a call using a local TEL URI to Internet URI mapping table. However, local TEL URIs cannot be resolved within the same DNS domain (e164.arpa) as the most significant digits (from a routing point of view) are missing.

A mechanism for achieving global routing using local TEL URIs might involve performing an analysis of the phone-context locally at the routing node. The node would maintain a look-up table mapping phone-contexts to national and international number prefixes. For example, the phone-context "ericsson.com" might be mapped to the number prefix "468". However, this approach lacks scalability and updating of information would be difficult.

Document "The E.164 to Uniform Resource Identifiers (URI) Dynamic Delegation Discovery System (DDDS) Application (ENUM)", FALTSTROM, P. ET AL, IETF STANDARD, INTERNET ENGINEERING TASK FORCE, IETF, CH, April 2004 (2004-04) discusses the use of the Domain Name System (DNS) for storage of E.164 numbers and how DNS can be used for identifying available services connected to one E.164 number.

Document "3GPP TS 23.228 v7.4.0 Ip Multimedia Subsystem (IMS)", 3RD GENERATION PARTNERSHIP PROJECT, 3GPP, June 2006 (2006-06), pages 1-197, Valbonne, France, discusses a Serving Call Session Control Function (S-CSCF) which supports the translation of the E.164 address contained in a Request-URI in a TEL URI format into a SIP routable SIP URI using an ENUM DNS translation mechanism.

Document "The tel URI for Telephone Numbers", SCHULZRINNE, H., COLUMBIA UNIVERSITY, IETF STANDARD, INTERNET ENGINEERING TASK FORCE, IETF, CH, December 2004 (2004-12)', discusses TEL URIs using global or local phone numbers.

### Summary of the Present Invention

The invention is represented and disclosed by the independent claims.

According to a first aspect of the present invention there is provided apparatus for resolving a local TEL Uniform Resource Identifier to a service Uniform Resource Identifier for routing a message over an IP-based communication system, the apparatus comprising:
first processing means for constructing a domain name system query string incorporating digits of the TEL Uniform Resource Identifier and a Context Identifier associated with the TEL Uniform Resource Identifier; and
second processing means for performing a Domain Name System lookup using said domain name system query string and for receiving in response said service Uniform Resource Identifier.

It is to be understood that the terms "TEL Uniform Resource Identifier" and "Context Identifier" are used here in accordance with the definitions set out in IETF RFC 3966 or in evolutions of this RFC. In order to facilitate its incorporation into the domain name system query string, the Context Identifier should specify a top level domain and one or more successive subdomains.

Said first processing means is arranged to perform the following steps to create the domain name system query string:
Remove characters from the TEL Uniform Resource Identifier with the exception of digits;
Reverse the order of the digits;
Place the separator "." between digits; and
Append the Context Identifier to the string.

Preferably, said second processing means is arranged to receive from the Domain Name System one or more NAPTR records. The or each NAPTR record contains a service Uniform Resource Identifier and, if necessary, the second processing means makes a selection from these.

Said service URI may be a SIP URI, or any other appropriate URI.

According to an aspect of the present invention, said apparatus is a Serving Call/Session Control Function server. However, the apparatus may also be another server within the IMS, or indeed a server within a private network, e.g. a Virtual Private Network or VPN.

According to a second aspect of the present invention there is provided a method of resolving a local TEL Uniform Resource Identifier to a service Uniform Resource Identifier for routing a message over an IP-based communication system, the method comprising:
combining digits of the TEL Uniform Resource Identifier and a Context Identifier associated with the TEL Uniform Resource Identifier to form a domain name system query string; and
performing a Domain Name System lookup using said domain name system query string receiving in response said service Uniform Resource Identifier.

Preferably, said step of combining the TEL Uniform Resource Identifier and a Context Identifier associated with the TEL Uniform Resource Identifier comprises:
Removing characters from the TEL Uniform Resource Identifier with the exception of digits;
Reversing the order of the digits;
Placing the separator "." between digits; and
Appending the Context Identifier to the string.

Preferably, Domain Name System lookup results in the return of one or more NAPTR records. An appropriate service Uniform Resource Identifier is identified from the NAPTR record(s).

### Brief Description of the Drawings

Figure 1 illustrates schematically the IP Multimedia Subsystem implemented over a 3GPP network;
Figure 2 illustrates a signalling process associated with a call set up within the IMS using a local TEL URI; and
Figure 3 illustrates schematically an S-CSCF within the IMS.

### Detailed Description of Certain Embodiments

To aid understanding of the following discussion, reference should be made to the following IETF Request For Comments (RFCs):
RFC 3761: The E.164 to Uniform Resource Identifiers (URI) Dynamic Delegation Discovery System (DDDS) Application (ENUM);
RFC 3762 Telephone Number Mapping (ENUM) Service Registration for H.323;
RFC 3764: ENUM service registration for Session Initiation Protocol (SIP) Addresses-of-Record; and
RFC 3966: The tel URI for Telephone Numbers.

RFC3966 is concerned with specifying the structure of a TEL URI for use in routing messages across an IP-based network such as the IMS. It is envisaged that TEL URIs will be used as destination addresses for SIP messages, supplementing the specific SIP URIs as described above. More particularly, RFC3966 specifies that a TEL URI will contain a phone number part. In the event that this phone number is not a globally unique number however, the TEL URI must include a phone-context. A phone-context can be provided by a global number digit set, for example the initial digits of an E.164 number or Mobile Station International ISDN (e.g. +441234), or by a domain name, e.g. operator.com. For the purpose of this discussion, it is assumed that the phone-context is provided by a domain name.

It is proposed here to use the phone-context associated with a local TEL URI as the root domain for the local numbers in that domain. The number digits of the local TEL URI can then be resolved in that domain using a DNS ENUM-based procedure with NAPTR lookup practices. Considering this process in more detail, the main steps in the resolution process are as follows:
1. Remove from the "local-number-digits" all characters with the exception of the digits. This step is simply to remove all "visual-separator" characters such as "(" from the local-number-digit. For example "(848) 2481" would be mapped to "8482481".
2. Put dots (".") between each digit. For example, 8.4.8.2.4.8.1
3. Reverse the order of the digits. For example, 1.8.4.2.8.4.8
4. Append the string taken from "phone-context" to the end of the reversed string.
   For example, 1.8.4.2.8.4.8.ericsson.com

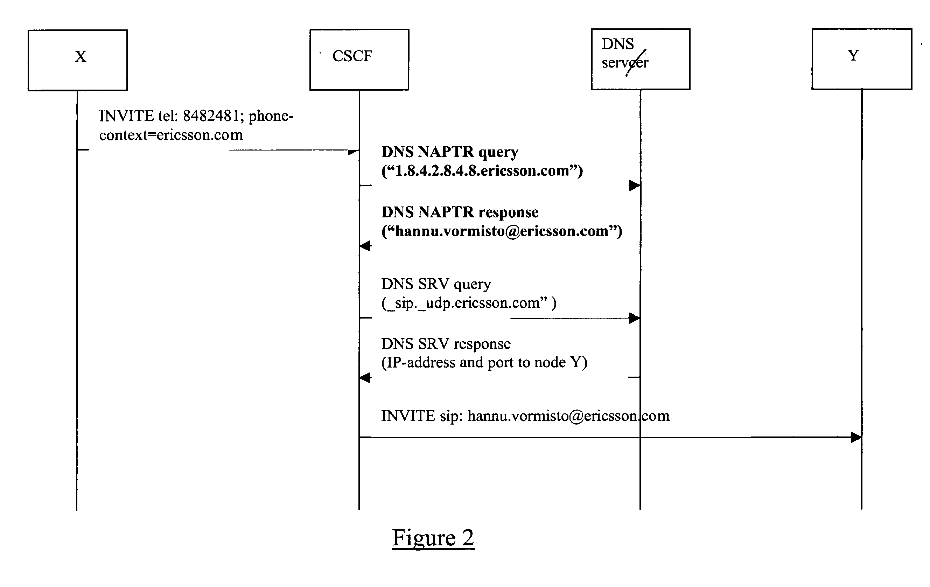

Within the IMS, this process is carried out at the S-CSCF. The S-CSCF then uses the result as a DNS query string, sending the query to a DNS root nameserver. This DNS server will return the IP address of the nameserver responsible for the "ericsson.com" domain. The S-CSCF will then re-send the query to this lower level nameserver which will either return the appropriate NAPTR records if it holds these or return the IP address of a further lower level nameserver if it does not (in which case the query is repeated for a third time and so on until the NAPTR records are retrieved). An example signalling flow is illustrated in Figure 2, whilst Figure 3 illustrates schematically functional entities within an S-CSCF 1, namely processing means 2 for generating a DNS query string and processing means 3 for receiving this string, sending a DNS query to the DNS 4, and processing the DNS response.

In the example given above, the phone-context "ericsson.com" is company specific. However, the procedure is not limited to company internal numbers and PSTN numbers that individual companies are managing. The procedure can be used for resolving all types of "local-number", even nationally significant numbers (i.e. numbers that are unique within a country but which to not possess an international dialling prefix) assuming that the national authorities set and manage a country specific root domain for resolving nationally significant numbers. For example, the phone-context "e164.se" could be stipulated as a root domain for nationally significant E.164 numbers in Sweden.

This procedure is not limited only to the recovery NAPTR "E2U+service" records, but covers also other type of record names. For example, a service field "L2U+service" (i.e. local number to URI) could be specified. This would allow the procedure to be used even if those service names that have already been registered for this type usage by IANA - like "E2U+SIP" [RFC 3764] and "E2U+H323" [RFC 3762].

As has already been noted above, ENUM is not limited to resolving TEL URIs to SIP URIs, and it can be used for resolving TEL URIs to other type of Internet routeable URIs, e.g. H.323 addresses. Application of the present invention would allow the mapping of local TEL URIs to any appropriate URI type using the phone-context associated with the TEL URI.

Whilst the discussion presented above has been concerned with the retrieval of NAPTR records by the querying agent, the procedure may also be used to retrieve other types of records, for example: A records used to retrieve IPv4 addresses (RFC 1034); AAAA records used to obtain IPv6 addresses (IETF RFC 2596); and SRV records (IETF RFC 2782).

## Claims

1. A Serving Call/Session Control Function server for resolving a local TEL Uniform Resource Identifier to a service Uniform Resource Identifier for routing a message over an IP-based communication system, the apparatus comprising:
first processing means (2) for constructing a domain name system query string incorporating digit of the local TEL Uniform Resource Identifier and a phone context associated with the local TEL Uniform Resource Identifier, both the local TEL Uniform Resource Identifier and the phone context being contained within said message; and
second processing means (3) for performing a Domain Name System lookup using said domain name system query string and for receiving in response said service Uniform Resource Identifier.

2. A Serving Call/Session Control Function server according to claim 1, said first processing means (2) being arranged to perform the following steps to create the domain name system query string:
remove characters from the local TEL Uniform Resource Identifier with the exception of digits;
reverse the order of the digits;
place the separator "." between digits; and
append the phone context to the string.

3. A Serving Call/Session Control Function server according to claim 1 or 2, said second processing means (3) being arranged to receive from the Domain Name System one or more NAPTR records.

4. A Serving Call/Session Control Function server according to claim 3, the or each NAPTR record containing a service Uniform Resource Identifier.

5. A Serving Call/Session Control Function server according to claim 4, wherein said service Uniform Resource Identifier is a SIP Uniform Resource Identifier.

6. A method of resolving a local TEL Uniform Resource Identifier to a service Uniform Resource Identifier for routing a message over an IP-based communication system, the message containing both the local TEL Uniform Resource Identifier and a phone context, the method comprising, at a Serving Call/Session Control Function server:
combining digits of the local TEL Uniform Resource Identifier and the phone context associated with the local TEL Uniform Resource Identifier to form a domain name system query string; and
performing a Domain Name System lookup using said domain name system query string and receiving in response said service Uniform Resource Identifier.

7. A method according to claim 6, said step of combining the local TEL Uniform Resource Identifier and the phone context associated with the local TEL Uniform Resource Identifier comprising:
removing characters from the local TEL Uniform Resource Identifier with the exception of digits;
reversing the order of the digits;
placing the separator "." between digits; and
appending the phone context to the string.

8. A method according to claim 6 or 7, said Domain Name System lookup resulting in the return of one or more NAPTR records.

## Patentansprüche

1. SC/SCF-(Serving Call/Session Control Function)-Server zum Auflösen einer lokalen TEL-URI (Uniform Resource Identifier) zu einer Service-URI (Uniform Resource Identifier) zum Routen einer Nachricht über ein IP-gestütztes Kommunikationssystem, wobei die Vorrichtung Folgendes umfasst:
ein erstes Verarbeitungsmittel (2) zum Konstruieren eines Bereichsnamensystem-Abfragestrings mit Ziffern der lokalen TEL-URI (Uniform Resource Identifier) und eines Telefonkontexts in Verbindung mit der lokalen TEL-URI (Uniform Resource Identifier), wobei sowohl die lokale TEL-URI (Uniform Resource Identifier) als auch der Telefonkontext in der Nachricht enthalten sind; und
ein zweites Verarbeitungsmittel (3) zum Ausführen einer Domänennamensystemsuche unter Verwendung des Domänennamensystem-Abfragestrings und zum Empfangen der Service-URI (Uniform Resource Identifier) als Reaktion darauf.

2. SC/SCF (Serving Call/Session Control Function)-Server nach Anspruch 1, wobei das erste Verarbeitungsmittel (2) zum Ausführen der folgenden Schritte zum Erzeugen des Domänennamensystem-Abfragestrings angeordnet ist:
Entfernen von Zeichen aus der lokalen TEL-URI (Uniform Resource Identifier) mit Ausnahme von Ziffern;
Umkehren der Reihenfolge der Ziffern;
Setzen des Separators "." zwischen Ziffern; und
Anhängen des Telefonkontexts an den String.

3. SC/SCF (Serving Call/Session Control Function)-Server nach Anspruch 1 oder 2, wobei das zweite Verarbeitungsmittel (3) die Aufgabe hat, einen oder mehrere NAPTR-Datensätze von dem Domänennamensystem zu empfangen.

4. SC/SCF (Serving Call/Session Control Function)-Server nach Anspruch 3, wobei der oder jeder NAPTR-Datensatz eine Service-URI (Uniform Resource Identifier) enthält.

5. SC/SCF (Serving Call/Session Control Function)-Server nach Anspruch 4, wobei die Service-URI (Uniform Resource Identifier) eine SIP-URI (Uniform Resource Identifier) ist.

6. Verfahren zum Auflösen einer lokalen TEL-URI (Uniform Resource Identifier) in eine Service-URI (Uniform Resource Identifier) zum Routen einer Nachricht über ein IP-gestütztes Kommunikationssystem, wobei die Nachricht sowohl die lokale TEL-URI (Uniform Resource Identifier) als auch einen Telefonkontext enthält, wobei das Verfahren am SC/SCF (Serving Call/Session Control Function)-Server Folgendes beinhaltet:
Kombinieren von Ziffern der lokalen TEL-URI (Uniform Resource Identifier) und des mit der lokalen TEL-URI (Uniform Resource Identifier) assoziierten Telefonkontexts zum Bilden eines Domänennamensystem-Abfragestrings; und
Ausführen einer Domänennamensystemsuche unter Verwendung des Domänennamensystem-Abfragestrings und Empfangen der Service-URI (Uniform Resource Identifier) als Reaktion darauf.

7. Verfahren nach Anspruch 6, wobei der Schritt des Kombinierens der lokalen TEL-URI (Uniform Resource Identifier) und des mit der lokalen TEL-URI (Uniform Resource Identifier) assoziierten Telefonkontexts Folgendes beinhaltet:
Entfernen von Zeichen aus der lokalen TEL-URI (Uniform Resource Identifier) mit Ausnahme von Ziffern;
Umkehren der Reihenfolge der Ziffern;
Setzen des Separators "." zwischen Ziffern; und
Anhängen des Telefonkontexts an den String.

8. Verfahren nach Anspruch 6 oder 7, wobei die Domänennamensystemsuche zur Rückgabe von einem oder mehreren NAPTR-Datensätzen führt.

## Revendications

1. Serveur de fonction de desserte de commande de session/appel destiné à interpréter un identificateur universel de ressource TEL local pour un identificateur universel de ressource de service, en vue d'acheminer un message sur un système de communication basé sur IP, le dispositif comprenant :
un premier moyen de traitement (2) pour construire une chaîne de requête de système de noms de domaine intégrant des chiffres de l'identificateur universel de ressource TEL local et un contexte de téléphone associé à l'identificateur universel de ressource TEL local, l'identificateur universel de ressource TEL local et le contexte de téléphone étant inclus dans ledit message ; et
un second moyen de traitement (3) pour mettre en oeuvre une consultation de système de noms de domaine en utilisant ladite chaîne de requête de système de noms de domaine, et pour recevoir en réponse ledit identificateur universel de ressource de service.

2. Serveur de fonction de desserte de commande de session/appel selon la revendication 1, dans lequel ledit premier moyen de traitement (2) est agencé de manière à mettre en oeuvre les étapes ci-dessous, en vue de créer la chaîne de requête de système de noms de domaine :
supprimer les caractères de l'identificateur universel de ressource TEL local à l'exception des chiffres ;
inverser l'ordre des chiffres ;
placer le séparateur "." entre les chiffres ; et
annexer le contexte de téléphone à la chaîne.

3. Serveur de fonction de desserte de commande de session/appel selon la revendication 1 ou 2, dans lequel ledit second moyen de traitement (3) est agencé de manière à recevoir, en provenance du système de noms de domaine, un ou plusieurs enregistrements de pointeur NAPTR.

4. Serveur de fonction de desserte de commande de session/appel selon la revendication 3, dans lequel ledit ou chaque enregistrement de pointeur NAPTR contient un identificateur universel de ressource de service.

5. Serveur de fonction de desserte de commande de session/appel selon la revendication 4, dans lequel ledit identificateur universel de ressource de service est un identificateur universel de ressource de protocole SIP.

6. Procédé d'interprétation d'un identificateur universel de ressource TEL local pour un identificateur universel de ressource de service, en vue d'acheminer un message sur un système de communication basé sur IP, le message contenant l'identificateur universel de ressource TEL local et un contexte de téléphone, le procédé consistant à, au niveau d'un serveur de fonction de desserte de commande de session/appel :
combiner les chiffres de l'identificateur universel de ressource TEL local et du contexte de téléphone associé à l'identificateur universel de ressource TEL local, en vue de former une chaîne de requête de système de noms de domaine ; et
mettre en oeuvre une consultation de système de noms de domaine en utilisant ladite chaîne de requête de système de noms de domaine, et recevoir en réponse ledit identificateur universel de ressource de service.

7. Procédé selon la revendication 6, dans lequel ladite étape consistant à combiner l'identificateur universel de ressource TEL local et le contexte de téléphone associé à l'identificateur universel de ressource TEL local, consiste à :
supprimer les caractères de l'identificateur universel de ressource TEL local à l'exception des chiffres ;
inverser l'ordre des chiffres ;
placer le séparateur "." entre les chiffres ; et
annexer le contexte de téléphone à la chaîne.

8. Procédé selon la revendication 6 ou 7, dans lequel ladite consultation de système de noms de domaine se traduit par le renvoi d'un ou plusieurs enregistrements de pointeur NAPTR.
